# EUROPÄISCHE PATENTANMELDUNG

(11) **EP 0 576 969 A1**
(43) Veröffentlichungstag der Anmeldung: **05.01.1994**
(21) Anmeldenummer: 93109954.3
(22) Anmeldetag: 22.06.1993
(51) Int. Cl.: G02B 6/42, G02B 6/28, G01M 11/00

(54) **Verfahren und Einrichtung zum Einbringen eines Biegekopplers in seine Koppelposition**

(30) Priorität: 01.07.1992 DE 4221566
(71) Anmelder: SIEMENS AKTIENGESELLSCHAFT, D-80333 München (DE)
(72) Erfinder: Kossat, Rainer, Dipl.-Ing., D-8213 Aschau (DE)

(57) **Zusammenfassung**

Mindestens ein Lichtwellenleiter (LW1) wird von einem beweglichen Dorn (ST) eines Biegekopplers (BK) zum Ein- oder Auskoppeln von Licht in eine gekrümmte Bahn gebracht. Die Bewegung des Dorns (ST) wird in einer wählbaren Arbeitsposition (AP) beendet und der Dorn (ST) dort festgehalten.

## Beschreibung

Die Erfindung betrifft ein Verfahren zum Einbringen eines Biegekopplers in seine Koppelposition, wobei mindestens ein Lichtwellenleiter durch einen beweglichen Dorn in eine gekrümmte Bahn gebracht wird, entlang der Licht ein- oder ausgekoppelt werden kann.

Eine Vorrichtung dieser Art ist aus der DE 34 29 947 C2 bekannt, bei der ein Bolzen einen Lichtwellenleiter gegen ein Unterteil einer Koppelvorrichtung drückt. Zur Einführung des Lichtwellenleiters in die Koppelvorrichtung wird der Bolzen entgegen einer Federkraft nach oben bewegt, so daß der Lichtwellenleiter in einfacher Weise von oben eingelegt werden kann. Nach dem Einbringen des Lichtwellenleiters wird der Bolzen nach unten bewegt und der Lichtwellenleiter dadurch gegen das Unterteil gedrückt, so daß er in einer um den Umfang des Bolzens verlaufenden Nut gekrümmt geführt wird. Der Bolzen ist dabei federnd gelagert, so daß ein enges Andrücken des Lichtwellenleiters gegen das Unterteil sichergestellt ist. Bei dieser bekannten Koppelvorrichtung besteht die Gefahr, daß es unter der fortdauernden Einwirkung der Federkraft, mit der der Bolzen gegen das Unterteil drückt, auch nach Beendigung des Schließvorganges zu einer weiteren Verformung kommt. Dies kann zu einer sich zeitlich verändernden Verformung, d.h. Fließen, der Beschichtung (Coating) des Lichtwellenleiters führen. In das Ausmaß des Fließvorganges gehen die Durchmessertoleranzen des Lichtwellenleiters mit ein, und zwar auch dann, wenn ein Anschlag vorgesehen ist. Dadurch kann sich die räumliche Lage des im Koppelbereich gebogen verlaufenden Lichtwellenleiters zu einem Sender bzw. zu einem Empfänger zeitlich weiterhin, d.h. z.B. auch während eines Meßvorganges, verändern. Dies hat nachteilig eine zeitliche Veränderung des Ein- bzw. Auskoppelwirkungsgrades zur Folge.

Aus der EP 0 485 848 ist ein Verfahren zum Ein- und Auskoppeln von Licht bei einem Lichtwellenleiter zu Meßzwecken bekannt. Im einzelnen wird dabei so verfahren, daß mittels eines Biegekopplers ein Druck auf den Lichtwellenleiter ausgeübt wird. Dabei wird die Stärke des ausgekoppelten Lichtes während der durch den Druck erfolgenden Verformung der Beschichtung gemessen, bevor der Endzustand der druckabhängigen Verformung erreicht wird. Der im Endzustand erreichbare Endmeßwert wird schließlich durch Extrapolation aus den während der Verformung gewonnenen Meßwerten festgestellt.

Der Erfindung liegt die Aufgabe zugrunde, einen Weg aufzuzeigen, wie bei einem Biegekoppler in einfacher Weise eine Lichtein-/Lichtauskopplung bezüglich mindestens eines Lichtwellenleiters zuverlässiger durchgeführt werden kann. Diese Aufgabe wird gemäß der Erfindung bei einem Verfahren der eingangs genannten Art dadurch gelöst, daß die Bewegung des Dorns in einer wählbaren Arbeitsposition beendet wird und daß der Dorn in dieser Arbeitsposition festgehalten wird.

Die Erfindung zeichnet sich vor allem dadurch aus, daß die Bewegung des Dorns, mit dem mindestens ein Lichtwellenleiter in seine gekrümmte Bahn gebracht wird, in einer beliebigen Position, d.h. in einer wählbaren Arbeitsposition, fixiert werden kann. Nach dem Einbringen des Biegekopplers in diese Arbeitsposition kann dadurch eine weitere, sich zeitlich verändernde Verformung des Lichtwellenleiters und damit eine zeitliche Veränderung seines Koppelfaktors bzw. Koppelwirkungsgrades bei einer Ein- oder Auskopplung von Licht weitgehend begrenzt bzw. vermieden werden. Durch diese wählbare Arretierung des beweglichen Dorns, das heißt nach der Wegbegrenzung des Dorns, ist eine weitere Verformung bzw. Fließen der Beschichtung (Coating) des Lichtwellenleiters weitgehend eingeschränkt. Ein weiterer Vorteil der Erfindung besteht darin, daß in das Ausmaß des Fließvorganges Durchmesserschwankungen des Lichtwellenleiters oder eines Lichtwellenleiter-Bändchens weit weniger oder gar nicht mehr eingehen. Da die Bewegung des Dorns in einer beliebig vorgebbaren Arbeitsposition abgebrochen werden kann, spielen für eine gesicherte Funktion des Biegekopplers z.B. für nachfolgende Messungen, Durchmessertoleranzen des Lichtwellenleiters oder variierende Bändchen-Dicken keine störende Rolle mehr. Denn durch die Arretierung des Dorns in seiner Arbeitsposition wird eine fortdauernde Kraft-Einwirkung des Dorns auf den Lichtwellenleiter in definierter Weise vermieden. Für den eigentlichen Meßvorgang können somit in einfacher Weise weitgehend konstante Aus- oder Einkoppelverhältnisse eingehalten werden.

Gemäß einer ersten, zweckmäßigen Weiterbildung der Erfindung wird der bewegliche Dorn quer zu seiner Wirk- bzw. Bewegungsachse in seiner Arbeitsposition fixiert. Seine Arretierung kann dabei zweckmäßig mit Hilfe eines Klemmstiftes durchgeführt werden, der quer zur Bewegungsachse des Dorns an diesen angreift und den Dorn in dessen Führung festhält.

Gemäß einer zweiten, zweckmäßigen Weiterbildung der Erfindung kann die Bewegung des Dorns in der Arbeitsposition mit Hilfe eines spezifischen Steuerkriteriums abgebrochen werden. Vorteilhaft kann zu diesem Zweck eine bestimmte Zeitdauer herangezogen werden. Zweckmäßig kann es sein, den Dorn zum Beispiel nach einer Zeitdauer von 1 bis 60 sec nach Schließen des Biegekopplers zu arretieren.

Vorteilhaft kann das spezifische Steuerkriterium auch aus der zeitlichen Änderung des Lichtpegels, bzw. der Lichtintensität abgeleitet werden, sobald der Biegekoppler geschlossen ist und dessen Dorn auf den Lichtwellenleiter drückt bzw. auf diesen einwirkt. Da die zeitliche Veränderung des Koppelfaktors proportional dem zeitlichen Verlauf des Leistungspegels folgt, kann aus diesem zweckmäßigerweise das Steuerkriterium für den Abbruch der Dornbewegung ermittelt werden. Auf diese Weise kann die weitergehende, d.h. fortdauernde, Verformung der Beschichtung des Lichtwellenleiters weitgehend unterbunden werden. Beispielsweise kann das relative Absinken des Lichtpegels bzw. der Lichtintensität als Maß für eine bereits erfolgte, für den nötigen Anpreßdruck ausreichende Verformung als Abbruchkriterium herangezogen werden.

Zweckmäßig kann es auch sein, das spezifische Steuerkriterium aus dem Verformungsweg des Lichtwellenleiters zu bestimmen, die dieser unter der Einwirkung der Druckkraft des Dorns aus seinem unverformten Ursprungszustand zurücklegt. Zu diesem Zweck kann eine Meßvorrichtung im Biegeminimum der gekrümmten Bahn des Lichtwellenleiters angebracht sein. Das Maß der Verformung kann beispielsweise mittels eines induktiven Meßsensors, eines kapazitiven Meßsensors oder mittels jedes anderen, im µm-Bereich einsetzbaren Meßsensors gemessen werden, wobei jeweils eine Relativierung für den Verformungsweg nach Absenkung des Dorns durchgeführt wird.

Die Erfindung betrifft auch eine Koppeleinrichtung zum Einbringen eines Biegekopplers in seine Koppelposition mit einem Aufnahmeteil für mindestens einen Lichtwellenleiter und mit einem beweglichen Dorn, der den Lichtwellenleiter gegen das Aufnahmeteil drückt, welche dadurch gekennzeichnet ist, daß eine Arretiervorrichtung für den beweglichen Dorn vorgesehen ist, die die Bewegung des Dorns in einer wählbaren Arbeitsposition beendet und den Dorn in dieser Arbeitsposition fixiert.

Besonders vorteilhaft läßt sich die erfindungsgemäße Koppeleinrichtung beim Ein-/oder Auskoppeln von Licht bei mindestens einem Lichtwellenleiter dann einsetzen, wenn nur punktuell Licht in einen relativ kleinen Kernbereich des Lichtwellenleiters ein- oder ausgekoppelt wird. Dies ist besonders bei der Einkopplung von Licht in Lichtwellenleiter-Kerne von Bedeutung, da dort zur Einkopplung einer ausreichend großen Lichtleistung eine gezielte, zeitinvariante-Fokussierung auf den Kern erforderlich ist.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: in schematischer Darstellung den Aufbau einer Koppeleinrichtung zur Durchführung des erfindungsgemäßen Verfahrens,
- Figur 2: im Querschnitt einen Lichtwellenleiter im Koppelbereich nach Figur 1 vor und nach der Verformung und,
- Figur 3: die Koppeleinrichtung nach Figur 1 mit einem eingelegten Lichtwellenleiter-Bändchen in einem Schnittbild senkrecht zur Zeichenebene von Figur 1.

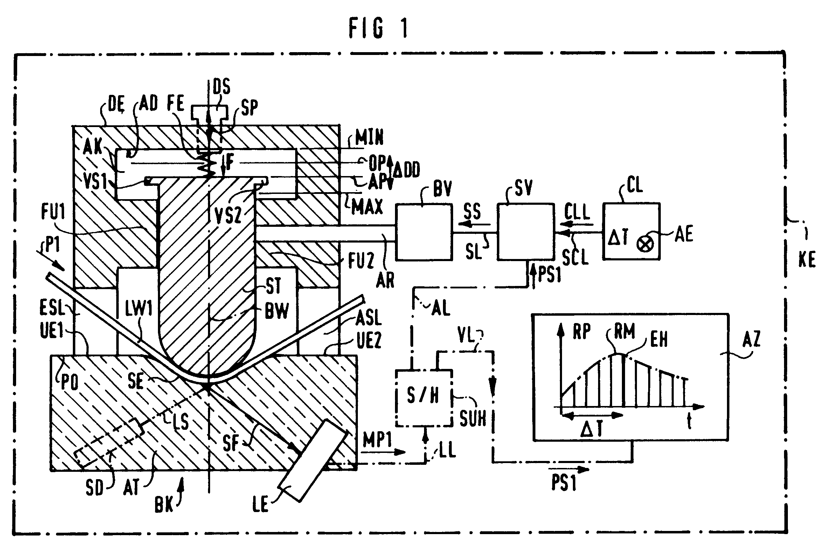

In Figur 1 ist eine Koppeleinrichtung KE teilweise im Schnitt dargestellt, die einen Biegekoppler BK aufweist, der auf einen Lichtwellenleiter LW1 einwirkt. Dieser Biegekoppler BK weist als feststehendes Unterteil ein Aufnahmeteil AT für den Lichtwellenleiter LW1 und ein bewegliches Oberteil in Form eines Deckels DE auf. Um den Lichtwellenleiter LW1 in das Aufnahmeteil AT plan und longitudinal einlegen zu können, kann der Deckel DE zweckmäßigerweise in eine Ebene senkrecht zur Schnittebene von Figur 1 nach hinten geklappt werden. Die Oberseite des Aufnahmeteils AT verläuft im Schnittbild von Figur 1 in dessen Mittelteil in Form eines Kreisbogenstückes, das heißt, sie weist dort im Profil eine kreisbogen-segmentartige Absenkung bzw. Mulde SE auf. Der übrige Teil der Oberseite des Aufnahmeteils AT ist hingegen eben ausgebildet. Das Aufnahmeteil AT oder zumindest die Senke SE ist zur Ein- und Auskopplung von Licht zweckmäßigerweise transparent ausgebildet, also aus durchsichtigem Material wie Plexiglas, Glas, usw.

Im geöffneten Zustand des Biegekopplers BK wird der Lichtwellenleiter LW1 geradlinig, d.h. ungekrümmt, auf die plane Oberfläche PO des Aufnahmeteils AT aufgelegt. Dann wird der Deckel DE auf das Aufnahmeteil AT geklappt, so daß diese beiden Bauteile den Lichtwellenleiter LW1 zwischen sich einschließen. Beim Herunterklappen des Deckels DE wird ein am Deckel DE angebrachter Dorn ST in Richtung auf das Aufnahmeteil AT zubewegt. Der Dorn ST kann vorteilhaft als Stempel oder als zylinderförmiger Bolzen ausgebildet sein. Er weist an seinem dem Aufnahmeteil AT zugewandten Ende zweckmäßigerweise eine entsprechend der kreisbogenförmig ausgebildeten Senke SE angepaßte Geometrieform auf. Um den Lichtwellenleiter LW1 am Grund der Senke SE des Aufnahmeteils AT "satt" andrücken zu können, ist für den Dorn ST zweckmäßigerweise eine Breite vorgesehen, die mindestens der Breite des Lichtwellenleiters LW1 entspricht. Er ist zweckmäßig in einer Aufhängekammer AK des Deckels DE über ein Federelement FE mit einer Unterseite bzw. Deckelinnenseite AD des Deckels DE verbunden. Der Dorn ST kann zweckmäßig zwischen einer minimalen Position MIN und einer maximalen Position MAX bewegt werden. Die Positionen MIN und MAX sind in Figur 1 mittels ausgezogener Linien angedeutet. In der maximalen Position MAX wird eine weitere Bewegung des Dornes ST in Richtung auf den Lichtwellenleiter LW1 durch einen linken und einen rechten Vorsprung VS1 bzw. VS2 an dem dem Deckel DE zugewandten Ende des Dornes ST endgültig unterbunden. Diese schlagen in der maximalen Position MAX jeweils an einem linken und an einem rechten Führungsteil FU1 und FU2 des Deckels DE in der Aufhängekammer AK an. Sie stellen somit die maximale Ausfahrposition für den Dorn ST dar. Während des Schließvorgangs ist der Dorn ST mit Spiel, d.h. beweglich nach allen Seiten montiert. Dadurch kann vorteilhaft vermieden werden, daß der Lichtwellenleiter LW1 bei einer etwaigen radialen Klappbewegung des Deckels DE mit einer Querkraft beaufschlagt wird.

Sobald nun der Biegekoppler BK vollständig geschlossen ist, d.h. der Deckel DE mit seinen unteren Enden UE1 und UE2 plan auf dem Aufnahmeteil AT aufliegt und der Dorn ST senkrecht auf dem Lichtwellenleiter LW1 steht, wird der Dorn ST von seiner Ausgangsposition OP zwischen der Position MIN und der Position MAX mit einer Kraft F des Federelementes FE in Richtung auf den Lichtwellenleiter LW1 gedrückt. Mit Hilfe einer außen an der Abdeckung AD zugänglich angebrachten Spannvorrichtung DS, insbesondere einer Drehschraube, kann die Druckkraft F des Federelementes FE vorteilhaft definiert eingestellt werden. Das Verstellen der Spannvorrichtung DS ist mit Hilfe eines Doppelpfeils SP angedeutet. Unter Einwirkung der Druckkraft F des Federelementes FE gleitet nun der Dorn ST zwischen den beiden Führungsteilen FU1 und FU2 des Deckels DE nach unten. Dabei drückt er den Lichtwellenleiter LW1 in die kreisbogenförmige Mulde SE und bewirkt dadurch die Krümmung des Lichtwellenleiters LW1.

Während dieser Abwärtsbewegung des Dorns ST erfährt der Lichtwellenleiter LW1 zweckmäßigerweise eine Druckkraft zwischen 2N und 50 N Newton.

Um ein Abknicken und dadurch eine Beschädigung des Lichtwellenleiters LW1 während dieses Biegevorganges zu verhindern, sind im Bereich der Auflageteile UE1 und UE2 des Deckels DE auf dem Aufnahmeteil AT ein linker Einlaßschlitz ESL und ein rechter Auslaßschlitz ASL für den Lichtwellenleiter LW1 vorgesehen. Diese beiden Aussparungen ESL und ASL im Deckel DE sorgen dafür, daß für den Lichtwellenleiter LW1 vorteilhaft eine ausreichende Bewegungsfreiheit während des Krümmungsvorgangs sichergestellt werden kann.

Der Dorn ST gleitet zwischen den beiden Führungsteilen FU1 und FU2 von seiner Ausgangsposition OP mit der Kraft F auf das Aufnahmeteil AT zu. Er preßt dabei den Lichtwellenleiter LW1 ausreichend fest und mit hinreichend großem Druck in eine definierte Koppellage am Boden der kreisbogenförmigen Senke bzw. Mulde SE an, um einen zeitlich möglichst invariablen Betriebszustand für die Ein- oder Auskopplung von Licht sicherzustellen. Lufteinschlüsse zwischen dem Aufnahmeteil AT und dem Coating des Lichtwellenleiters LW1 sind somit vorteilhaft verhindert. Zur Vermeidung von Lufteinschlüssen kann zusätzlich ein Immersionsmittel, wie z.B. Glycerin, in die transparente Senke SE eingebracht werden.

Sobald der Dorn ST auf den Lichtwellenleiter LW1 einwirkt, beginnt sich die Beschichtung (Coating) des Lichtwellenleiters LW1 zu verformen, d.h. zeitlich zu verändern bzw. zu fließen. Aus diesem Grund wird der Dorn ST zu einem bestimmten Zeitpunkt nach Beginn seiner Abwärtsbewegung in einer Arbeitsposition AP gestoppt. In Figur 1 ist diese Arbeitsposition AP mittels einer ausgezogenen Linie eingezeichnet. Dadurch kann die Verformung bzw. das Fließen der Beschichtung (Coating) des Lichtwellenleiters LW1 zumindest begrenzt oder gar vollständig verhindert werden. Den Abbruch der Dornbewegung erreicht man dadurch, daß der Dorn ST in der Arbeitsposition AP mit Hilfe einer Arretiervorrichtung AR zwischen den beiden Fürhungsteilen FU1 und FU2 quer zu seiner strichpunktiert angedeuteten Bewegungs- bzw. Wirkachse BA arretiert bzw. festgeklemmt wird. Seine Arretierung kann dabei zweckmäßig mittels eines Klemmstiftes oder Klemmbolzens durchgeführt werden, der am Dorn ST quer zu dessen Bewegungsachse BW angreift und den Dorn ST zwischen den Führungsteilen FU1 und FU2 festhält. Der Dorn ST wird in dieser Arbeitsposition AP also zu einem bestimmten Zeitpunkt nach Aktivieren des Biegekopplers BK, d.h. nach Absenken des Dorns ST, mechanisch fixiert.

Vorteilhaft kann die Arretiervorrichtung AR in Figur 1 mit Hilfe einer Betätigungsvorrichtung BV bedient werden. Die Betätigungsvorrichtung BV kann dabei zweckmäßig mit Hilfe einer Steuervorrichtung SV aktiviert werden. Zu diesem Zweck wird ein Steuersignal SS über eine Steuerleitung SL von der Steuervorrichtung SV zur Betätigungsvorrichtung BV übermittelt, die dann die Arretiervorrichtung auslöst. Zweckmäßig kann es aber auch sein, daß die Arretiervorrichtung AR manuell durch eine Bedienperson direkt betätigt wird.

Die Zeitdauer ΔT nach Aktivieren des Biegekopplers BK, d.h. nach Absenken des Dorns ST, in der sich der Dorn ST von seiner Ausgangsposition OP zu seiner Arbeitsposition AP bewegt und dabei einen Weg ΔDD zurücklegt, kann vorteilhaft aus einem spezifischen Steuerkriterium abgeleitet werden.

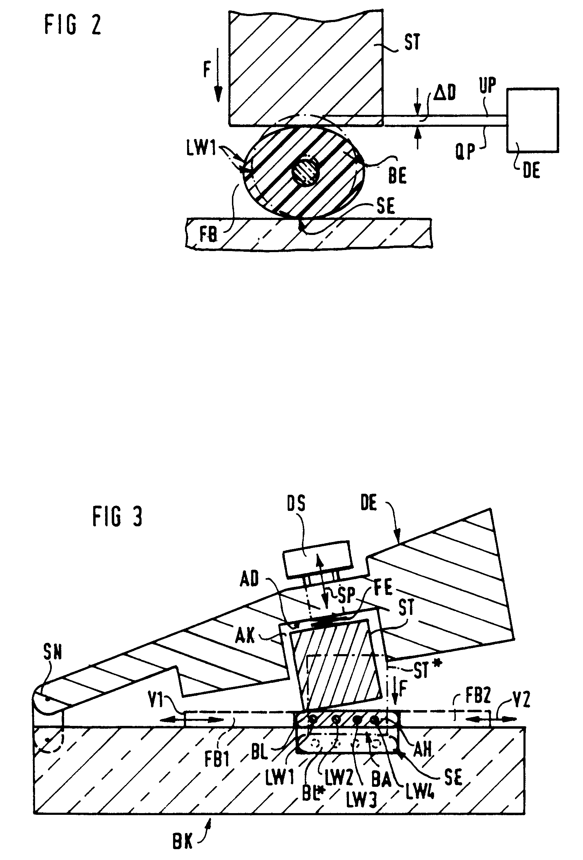

Beispielhaft kommen folgende Steuerkriterien für den Abbruch der Dornbewegung in Frage:
1. Mit Hilfe eines Zeitgebers CL kann bei Ablauf einer Zeitdauer ΔT nach Aktivieren des Biegekopplers BK, d.h. insbesondere nach Beginn der Dornbewegung in die Senke SE, die Arretiervorrichtung AR manuell oder automatisch betätigt werden. Für den Fall einer automatischen Ansteuerung der Arretiervorrichtung AR wird ein Steuersignal CLL über eine Steuerleitung SCL vom Zeitgeber CL an die Steuervorrichtung SV gesendet. Diese löst dann das Steuersignal SS für die Betätigungsvorrichtung BV über die Steuerleitung SL aus. Im Fall einer manuellen Bedienung der Arretiervorrichtung AR wird für eine Bedienperson der Zeitpunkt ΔT zum Betätigen der Arretiervorrichtung AR durch ein Anzeigesignal angezeigt. In Figur 1 ist eine optische Anzeigeeinheit AE beim Zeitgeber CL dargestellt. Es ist auch eine z.B. akustische Wiedergabe des Anzeigesignals möglich. Die Wegbegrenzung des Dorns ST kann zweckmäßigerweise nach einer Zeitdauer ΔT zwischen 1 sec und 60 sec erfolgen.
2. Das spezifische Steuerkriterium zum Abbruch der Dornbewegung kann auch aus der zeitlichen Änderung eines Koppelfaktors bzw. Koppelwirkungsgrades vorteilhaft abgeleitet werden, der die in den Lichtwellenleiter LW1 ein- oder ausgekoppelte Lichtmenge charakterisiert. Zu diesem Zweck kann sofort nach Beginn der Dornbewegung mit dem Messen des relativen ein- oder ausgekoppelten Lichtpegels begonnen werden. In Figur 1 wird bei Ankopplung eines Empfängers an den Lichtwellenleiter LW1 in diesem ein Meßsignal P1 geführt. Aus diesem Meßsignal P1 wird im Koppelbereich, d.h. Krümmungsbereich, des Lichtwellenleiters LW1 mit einem jeweils spezifischen Koppelfaktor eine bestimmte Lichtmenge ausgekoppelt und von einem Empfänger LE im transparenten Aufnahmeteil AT aufgenommen. Die ausgekoppelte Lichtmenge ist durch einen Pfeil SF gekennzeichnet. Das ausgekoppelte Licht wird dabei durch das transparente Aufnahmeteil AT auf mindestens ein lichtempfindliches Element, bevorzugt auf mindestens eine Photodiode, des Empfängers LE gelenkt und dort in elektrische Meßsignale MP1 umgewandelt. Für die Ermittlung des spezifischen Steuerkriteriums wird zweckmäßigerweise der zeitliche Verlauf des ausgekoppelten Lichtpegels MP1 durch die Abtastung einzelner Meßpunkte in einer vom Empfänger LE kommenden, strichpunktiert gezeichneten Leitung LL in kurzen Zeitabständen mittels einer strichpunktierten Abtast- und Halteschaltung (sample and hold) SUH erfaßt. Sie übergibt die dann in ihr digitalisierten Meßsignale PS1 über eine ebenfalls strichpunktiert angedeutete Meßleitung AL der Steuervorrichtung SV. Wird nun z.B. festgestellt, daß der Meßpegel dieser sofort nach Schließen des Dorns ST aufgenommenen Meßsignale MP1 bereits wieder sinkt oder bereits zu sinken beginnt, so wird zu diesem Zeitpunkt die Bewegung des Dorns abgebrochen. Ein weiteres Maximum im Verlauf des relativen Empfangspegels wird dann mit hoher Wahrscheinlichkeit nicht mehr auftreten.
   In Figur 1 ist ein relativer, ausgekoppelter Lichtpegel RP über der Beobachtungszeit t nach Beginn der Dornbewegung beispielhaft in einer Anzeigevorrichtung AZ aufgezeichnet. Diese Anzeigevorrichtung AZ kann zweckmäßigerweise direkt an die Abtast- und Halteschaltung SUH über eine strichpunktiert angedeutete Datenleitung VL angeschlossen sein. Über diese werden die digitalisierten Meßsignale PS1 an die Anzeigevorrichtung AZ übermittelt und dort visualisiert. In der Momentaufnahme von Figur 1 zeigen die diskreten Meßsignale für den Lichtpegel RP eine strichpunktiert eingezeichnete Einhüllende EH, die unmittelbar nach Schließen des Dorns ST aufgrund der fortschreitenden Krümmung bzw. Verformung des Lichtwellenleiters LW1 ansteigt, ein relatives Maximum RM aufweist, und danach aufgrund der einsetzenden Verformung der Beschichtung des Lichtwellenleiters wieder abnimmt. Nach Überschreiten des Maximums RM wird zur Zeit t = ΔT die Bewegung des Dorns ST gestoppt, um eine weitergehende Abnahme des Koppelwirkungsgrades und damit des empfangenen Lichtpegels RP weitgehend einzuschränken.
   Alternativ kann als weiteres Abbruchkriterium z.B. vorteilhaft der Steigungsverlauf der Einhüllenden EH unmittelbar nach Schließen des Dorns ST herangezogen werden. Der Maximalwert RM ( = Tangente waagerecht) bestimmt dann den Abbruchzeitpunkt ΔT.
   Nach Abbruch der Dornbewegung kann der eigentliche Meßvorgang mit dem Empfänger LE beginnen. Von da an ist in der Arbeitsposition AP des Biegekopplers BK eine zeitliche Stabilität bzw. Konstanz des Koppelfaktors bzw. Koppelwirkungsgrades für die gesamte Meßzeit weitgehend sichergestellt, so daß Messungen mit hoher Genauigkeit möglich sind.
   Dies ist insbesondere bei einer ortsaufgelösten, segmentweisen Auskopplung von Licht entlang des Krümmungsbogens des Lichtwellenleiters LW1 von Bedeutung. Zur segmentierten Lichtaufnahme können vorteilhaft Mehrquadrantendioden, Dioden-Arrays oder CCD-Elemente vorgesehen sein. Bei diesen sind jeweils einem relativ kleinen lichtempfindlichen Element ein relativ kleines, lokales Auskoppelsegment des Lichtwellenleiters LW1 eindeutig zugeordnet, so daß eine hohe zeitliche Konstanz der Koppelverhältnisse wünschenswert ist.
   Analoge Überlegungen gelten insbesondere auch für die Ankopplung eines Senders an den Lichtwellenleiter LW1. Im linken Teil von Figur 1 ist ein strichpunktiert eingezeichneter Sender SD, z.B. ein Einkoppel-Lichtwellenleiter oder ein LED-Element, im transparenten Aufnahmeteil AT angebracht. Der Sender SD ist dort so ausgerichtet, daß sein Sendesignal LS nahezu tangential im Krümmungsminimum des Lichtwellenleiters LW1 in dessen Kern eingekoppelt wird. Die Hauptabstrahlungsrichtung des Sendesignals LS ist in Figur 1 durch einen strichpunktierten Pfeil gekennzeichnet. Für die Einkopplung einer ausreichend großen Lichtleistung ist es zweckmäßig, das Sendesignal LS zu einem möglichst kleinen Leuchtfleck zu fokussieren und punktuell in den relativ kleinen Kern des Lichtwellenleiters LW1 einzuspeisen. Der Kern wird also vorteilhaft dem Leuchtfleck des Sendesignals LS in eindeutiger Weise zugeordnet und auf diesen präzise ausgerichtet. Indem auch im Sendefall (wie beim Empfangsfall ausführlich beschrieben) die Bewegung des Dorns ST abgebrochen wird, kann ein annähernd zeitlich stabiler Einkoppelzustand sichergestellt werden. Ab diesem durch die Arretierung des Dorns ST festgelegten Zeitpunkt sind weitere fortlaufende Verformungen der Beschichtung (Coating) des Lichtwellenleiters LW1 weitgehend verhindert. Auf diese Weise kann während der Einkopplung von Licht vorteilhaft ein annähernd konstanter Koppelfaktor für den nachfolgenden, eigentlichen Meßvorgang eingehalten werden.
   Für die Bestimmung des optimalen Sende-Koppelfaktors wird im vorliegenden Beispiel rechts von der Einkopppelstelle des Sendesignals LS zusätzlich eine Empfangseinrichtung benötigt, die analog zur Koppeleinrichtung KE aufgebaut ist. Dort ist mittels der im rechten Teil von Figur 1 dargestellten, verschiedenen Auswahlkriterien die Bestimmung der optimalen Senderankopplung möglich. Das daraus abgeleitete Steuerkriterium dient zur Arretierung des dem Sender SD zugeordneten Dorns in dessen Arbeitsposition.
3. Ein weiteres spezifisches Steuerkriterium kann vorteilhaft auch aus dem Verformungsweg D des Lichtwellenleiters LW1 bestimmt werden, um den dieser während des Einwirkens der Druckkraft F gestaucht wird. Zur Erläuterung der Verhältnisse wird auf Figur 2 Bezug genommen, wo der Lichtwellenleiter LW1 in einer gegenüber Figur 1 um 90^{o} gedrehten Position gezeichnet ist. Er wird dort durch den Dorn ST in die Senke SE vorteilhaft möglichst ohne Lufteinschlüsse angedrückt und dort fest angepreßt. Unter Einwirkung der Druckkraft F wandert oben und unten ein Teil des Coatingmaterials BE in den freien Bereich FB (Spaltbereich FB) zwischen Dorn ST und Aufnahmeteil AT ab und wird in diesen Spaltbereich FB hineingedrückt. Es ergibt sich somit eine ungleichmäßige, in etwa ovale Verteilung des Beschichtungsmaterials BE unter Einwirkung der Druckkraft F. Zur Veranschaulichung dieser Verformung des Lichtwellenleiters LW1 ist strichpunktiert der ursprüngliche, unverformte Zustand des Lichtwellenleiters LW1 eingezeichnet. Die Beschichtung BE wandert also um den Verformungsweg ΔD zwischen einem in etwa kreisförmigen, unverformten Ursprungsprofil UP des Lichtwellenleiters LW1 zum gedrückten bzw.gequetschten Profil QP des Lichtwellenleiters LW1.
   Der größte zulässige Verformungsweg ΔD, nach dem ein Abbruch der Dornbewegung erfolgt, liegt zweckmäßigerweise zwischen 5µm und 75 µm. Das Ausmaß der Verformung kann beispielsweise mit Hilfe eines induktiven Meßsensors, eines kapazitiven Meßsensors oder mittels jedes anderen im µm-Bereich einsetzbaren Meßsensors gemessen werden. In Figur 2 ist beispielhaft eine derartige Meßeinrichtung DE für eine Relativmessung des Verformungsweges ΔD vom Ursprungsprofil UP zum gequetschten Profil QP schematisch eingezeichnet.
   Insgesamt gesehen können nach dem Festkeilen des Dorns ST quer zu seinen Führungsteilen FU1 und FU2 mit der Arretiervorrichtung AR an einer beliebig vorgebbaren Arbeitsposition AP nun Meßsignale in den Lichtwellenleiter LW1 unter weitgehend konstanten, zeitinvariablen Koppelverhältnissen ein- oder ausgekoppelt werden. Auf eine Korrektur der Meßsignale zur Elimination von zeitvariablen Einflußgrößen kann damit im allgemeinen verzichtet werden.
   Figur 3 zeigt schematisch den erfindungsgemäßen Biegekoppler BK nach Figur 1 in einer Schnittebene senkrecht zur Zeichenebene von Figur 1 im Bereich der Senke SE. Unverändert übernommene Elemente aus Figur 1 sind dabei jeweils mit den gleichen Bezugszeichen versehen. Im Unterschied zu Figur 1 wird jetzt im aufgeklappten Zustand des Biegekopplers BK eine Bandleitung BL mit beispielhaft vier Lichtwellenleitern LW1 - LW4, die in eine etwa rechteckförmige, äußere Umhüllung AH eingebettet sind, auf das Aufnahmeteil AT des Biegekopplers BK geradlinig, d.h. ungekrümmt, aufgelegt. Mit Hilfe zweier Führungsbacken FB1 und FB2, die sich parallel zur Längsachse der Bandleitung BL erstrecken, kann die Bandleitung BL vorteilhaft seitlich bezüglich ihrer Längsachse in ihrer Lage fixiert werden. Diese Führungsbacken FB1 und FB2 können zweckmäßig vor und nach der Senke SE am Aufnahmeteil AT angebracht sein, so daß der Dorn ST für verschieden breite Bandleitungen in jedem Fall in die Senke SE ungehindert abgesenkt werden kann. In der Schnittebene von Figur 3 durch die Senke SE sind die Führungsbacken FB1 und FB2 gestrichelt zusätzlich mit angedeutet. Zweckmäßigerweise sind die Führungsbacken FB1 und FB2 quer zur Längsachse der Bandleitung BL beweglich angeordnet, so daß, wie mit den Doppelpfeilen V1 und V2 jeweils angedeutet ist, eine variable Führungsbreite für unterschiedliche Bandleitungsbreiten oder eine variierende Lichtwellenleiter-Anzahl einstellbar ist. Dann wird der Deckel DE, der am Aufnahmeteil AT zweckmäßigerweise über ein Scharnier SN beweglich angeordnet ist, auf das Aufnahmeteil AT mit der Bandleitung BL zugeklappt. Das Scharnier SN ist zweckmäßigerweise an einer Seitenkante des Aufnahmeteils AT angeordnet. Der im Querschnittsbild von Figur 3 rechteckförmige Dorn ST ist über das Federelement FE an der Deckelinnenseite AD in der etwa rechteckförmigen Aufhängekammer AK im Deckel DS aufgehängt. Durch die bogenförmige Klappbewegung kommt der dem Drehpunkt des Deckels DE nähere Teil des Dorns ST früher mit der ungekrümmt verlaufenden Bandleitung BL in Berührung als sein radial weiter außen liegender Teil. In Figur 3 ist diese Position des Dorns ST durchgezogen eingezeichnet. Der Dorn ST liegt zuerst an der linken Seite der Bandleitung BL im Bereich des Lichtwellenleiters LW1 an. Die rechte Außenseite mit dem Lichtwellenleiter LW4 bleibt hingegen zunächst unberührt. Auf diese Weise wird die Bandleitung BL im Bereich des Lichtwellenleiter LW1 unter der Auflagekraft des Dorns ST zuerst nach unten in die Senke SE gebracht. Die rechte Außenseite mit dem Lichtwellenleiter LW4 folgt zum Schluß in die Senke SE nach. In Figur 3 ist die Bandleitung in ihrer gekrümmten Lage in der Senke SE strichpunktiert eingezeichnet und mit BL* bezeichnet. Um ein Verkanten der Bandleitung BL* in ihrer Koppelposition am Grund der Senke SE möglichst zu verhindern, ist der Dorn ST vorteilhaft lose, mit Spiel nach allen Seiten in der Aufhängekammer AK aufgehängt. Dadurch kann insbesondere weitgehend vermieden werden, daß aufgrund der bogenförmigen Klappbewegung eine Querkraftkomponente auf die Bandleitung BL* einwirken und diese etwa einseitig belasten kann. Auf diese Weise ist es vorteilhaft möglich, Toleranzen im Umhüllungsmaterial oder variierende Bandleitungsdicken auszugleichen. In Figur 3 liegt der Dorn gleichmäßig an der Oberseite der Bandleitung BL* in der Senke SE an. Er ist dort mit ST* bezeichnet und strichpunktiert dargestellt. Liegt also der Deckel DE plan am Aufnahmeteil AT an, so steht der Dorn ST* mit seiner Biegekante BA senkrecht zur Längsachse der Bandleitung BL*. Der Dorn ST* liegt plan an der Oberseite der Bandleitung BL* mit seinem Eigengewicht an, ohne diese einseitig zu belasten. Zum Einbringen des Biegekopplers BK in seine Arbeitsposition AP wird der Dorn ST* schließlich über die Spannvorrichtung DS, insbesondere einer Drehschraube, mit der Druckkraft F senkrecht zur Bandleitung BL* auf diese gleichmäßig zwischen den hier nicht sichtbaren Führungsteilen FU1 und FU2 zubewegt. Die Vorspannwirkung der Spannvorrichtung DS ist dabei durch den Pfeil SP angedeutet. Dadurch wird die Bandleitung BL* in definierter Weise in die kreisbogenartige Senke SE gedrückt und dort zur Ein- oder Auskopplung vom Licht in ihrer Koppelposition am Boden der Senke SE angepreßt.
   Die Einwirkung des Dorns ST auf die Bandleitung BL* in der Senke SE kann schließlich entsprechend den Figuren 1 und 2 mit Hilfe eines spezifischen Steuerkriteriums in einer wählbaren Arbeitsposition AP abgebrochen werden.
   Insbesondere kann zum Ableiten eines spezifischen Steuerkriteriums bei einem Lichtwellenleiter-Bändchen zweckmäßigerweise das Maximum des am niedrigsten verlaufenden Lichtpegels, d.h. das Maximum im Intensitätsverlauf für den Lichtwellenleiter mit dem schlechtesten Koppelfaktor im Bändchen, zum Abbruch der Dornbewegung herangezogen werden. Ebenso kann das Fallen des kleinsten auftretenden Lichtpegels unter allen Lichtpegeln der Lichtwellenleiter im Bändchen als Abbruchkriterium dienen. Auf diese Weise wird vorteilhaft sichergestellt, daß zumindest für den Lichtwellenleiter mit dem schlechtesten Koppelwirkungsgrad und damit auch für alle anderen Lichtwellenleiter im Bändchen zumindest keine weitere Verschlechterung der Koppelverhältnisse, sondern eine zeitliche Stabilisierung des Koppelzustandes eintritt.
   Die Koppeleinrichtung KE kann Zweckmäßig Bestandteil eines Lichtwellenleiter-Dämpfungsmeßgerätes oder eines Lichtwellenleiter-Spleißgerätes in der Einfaser- oder in der Mehrfaser-Technik (bei Lichtwellenleiter-Bändchen) sein. Sie ist besonders für Meßsysteme nach dem LID-Prinzip ("light injection and detection") geeignet, da dort hohe Anforderungen an die Konstanz der Leistungspegel in den Lichtwellenleitern während der gesamten Meßzeit für exakte Meßergebnisse gestellt werden.

## Patentansprüche

1. Verfahren zum Einbringen eines Biegekopplers (BK) in seine Koppelposition, wobei mindestens ein Lichtwellenleiter (LW1) durch einen beweglichen Dorn (ST) in eine gekrümmte Bahn gebracht wird, entlang der Licht ein- oder ausgekoppelt werden kann,
**dadurch gekennzeichnet,**
daß die Bewegung des Dorns (ST) in einer wählbaren Arbeitsposition (AP) beendet wird und daß der Dorn (ST) in dieser Arbeitsposition (AP) festgehalten wird.

2. Verfahren nach Anspruch 1
**dadurch gekennzeichnet,**
daß die Bewegung des Dorns (ST) aufgrund eines spezifischen Steuerkriteriums beendet wird.

3. Verfahren nach Anspruch 2,
**dadurch gekennzeichnet,**
daß als spezifisches Steuerkriterium eine wählbare Zeitdauer (ΔT) herangezogen wird.

4. Verfahren nach Anspruch 3,
**dadurch gekennzeichnet,**
daß die Zeitdauer (ΔT) zwischen 1 sec und 60 sec gewählt wird.

5. Verfahren nach Anspruch 2,
**dadurch gekennzeichnet,**
daß das spezifische Steuerkriterium beim angekoppelten Lichtwellenleiter (LW1) aus der zeitlichen Änderung seines ein- /ausgekoppelten Lichtpegels abgeleitet wird.

6. Verfahren nach Anspruch 2,
**dadurch gekennzeichnet,**
daß das spezifische Steuerkriterium aus dem Verformungsweg (ΔD) dem Lichtwellenleiters (LW1) bestimmt wird.

7. Verfahren nach einem der vorhergehenden Ansprüche,
**dadurch gekennzeichnet,**
daß der Dorn (ST) während seiner Bewegung seitlich geführt wird.

8. Verfahren nach einem der vorhrgehenden Ansprüche,
**dadurch gekennzeichnet,**
der Dorn (ST) bis zu seinem Festhalten in der Arbeitsposition (AP) mit axialem und radialem Spiel geführt wird.

9. Verfahren nach einem der vorhergehenden Ansprüche,
**dadurch gekennzeichnet,**
daß der Lichtwellenleiter (LW1) während der Bewegung des Dorns (ST) von diesem mit einer Kraft zwischen 2 und 50 Newton gedrückt wird.

10. Verfahren nach einem der vorhergehenden Ansprüche,
**dadurch gekennzeichnet,**
daß der Dorn (ST) quer zu seiner Bewegungsachse (BW) arretiert wird.

11. Verfahren nach einem der vorhergehenden Ansprüche,
**gekennzeichnet durch**
die Anwendung bei mindestens einem Einzel-Lichtwellenleiter.

12. Verfahren nach einem der Ansprüche 1 bis 10,
**gekennzeichnet durch**
Anwendung bei Lichtwellenleiter-Bändchen.

13. Koppeleinrichtung (KE) zum Ein bringen eines Biegekopplers (BK) in seine Koppelposition mit einem Aufnahmeteil (AT) für mindestens einen Lichtwellenleiter (LW1) und mit einem beweglichen Dorn (ST), der den Lichtwellenleiter (LW1) gegen das Aufnahmeteil (AT) drückt,
**dadurch gekennzeichnet,**
daß eine Arretiervorrichtung (AR) für den beweglichen Dorn (ST) vorgesehen ist, die die Bewegung des Dorns (ST) in einer wählbaren Arbeitsposition (AP) beendet und den Dorn (ST) in dieser Arbeitsposition (AP) fixiert.

14. Koppeleinrichtung nach Anspruch 13,
**dadurch gekennzeichnet,**
daß die Arretiervorrichtung (AR) quer zur Bewegungsachse (BW) des Dorns (ST) angeordnet ist, und daß die Arretiervorrichtung (AR) quer am Dorn (ST) angreift.

15. Koppeleinrichtung nach einem der Ansprüche 13 oder 14,
**dadurch gekennzeichnet,**
daß Mittel zur Bestimmung eines spezifischen Steuerkriteriums für den Abbruch der Bewegung des Dorns (ST) vorgesehen sind.

16. Koppeleinrichtung nach Anspruch 15,
**dadurch gekennzeichnet,**
daß eine Zeitgebervorrichtung (CL) vorgesehen ist, deren Zeitdauer (ΔT) als spezifisches Steuerkriterium verwendet ist.

17. Koppeleinrichtung nach Anspruch 15,
**dadurch gekennzeichnet,**
daß zur Ermittlung des spezifischen Steuerkriteriums ein Meßsystem (LE, S/H) für die Bestimmung der zeitlichen Änderung des beim angekoppelten Lichtwellenleiter (LW1) ein- /ausgekoppelten Lichtpegels vorgesehen ist.

18. Koppeleinrichtung nach Anspruch 15,
**dadurch gekennzeichnet,**
daß zur Bestimmung des spezifischen Steuerkriteriums eine Meßvorrichtung (DE) für den Verformungsweg (ΔD) des Lichtwellenleiters (LW1) vorgesehen ist.

19. Koppeleinrichtung nach einem der Ansprüche 13 bis 18,
**dadurch gekennzeichnet,**
daß eine Betätigungsvorrichtung (BV) zum Auslösen der Arretiervorrichtung (AR) vorgesehen ist.

20. Koppeleinrichtung nach einem der Ansprüche 13 bis 19,
**dadurch gekennzeichnet,**
daß der bewegliche Dorn (ST) als Stempel ausgebildet ist.

21. Koppeleinrichtung nach einem der Ansprüche 13 bis 20,
**dadurch gekennzeichnet,**
daß die Arretiervorrichtung (AR) als Klemmstift ausgebildet ist.

22. Koppeleinrichtung nach einem der Ansprüche 13 bis 21,
**dadurch gekennzeichnet,**
daß eine Steuervorrichtung (SV) zum Auslösen der Betätigungsvorrichtung (BV) vorgesehen ist.

23. Koppeleinrichtung nach einem der Ansprüche 13 bis 22,
**dadurch gekennzeichnet,**
daß die Koppeleinrichtung (KE) Bestandteil eines Lichtwellenleiter-Meßgerätes, insbesondere eines Spleiß- oder Dämpfungsmeßgerätes ist.

24. Koppeleinrichtung nach einem der Ansprüche 13 bis 23,
**dadurch gekennzeichnet,**
daß am Dorn (ST) ein Federelement (FE) angreift.

25. Koppeleinrichtung nach einem der Ansprüche 13 bis 24,
**dadurch gekennzeichnet,**
daß für den Dorn (ST) seitliche Führungsteile (FU1, FU2) vorgesehen sind.

26. Koppeleinrichtung nach einem der Ansprüche 13 bis 25,
**dadurch gekennzeichnet,**
daß im Aufnahmeteil (AT) verstellbare Führungsmittel (FB1, FB2) für den Lichtwellenleiter (LW1), insbesondere für Lichtwellenleiter-Bändchen (BL), vorgesehen sind.
